# EUROPEAN PATENT SPECIFICATION

(11) **EP 0 968 970 B1**
(45) Date of publication and mention of the grant of the patent: **27.08.2003**
(21) Application number: 99660110.0
(22) Date of filing: 18.06.1999
(51) Int. Cl.: C03B 27/044, C03B 27/04

(54) **Method and apparatus for tempering glass panels**
Verfahren und Vorrichtung zum Härten von Glasscheiben
Procédé et appareil pour la trempe de feuilles de verre

(30) Priority: 30.06.1998 FI 981502
(43) Date of publication of application: 05.01.2000
(73) Proprietor: Tamglass Ltd Oy, 33730 Tampere (FI)
(72) Inventor: Pesonen, Tarmo, 37550 Moisio (FI); Kurvinen, Jari, 57830 Viiala (FI)
(74) Representative: LEITZINGER OY

(56) References cited:
- EP-A- 0 000 268
- EP-A- 0 558 912

## Description

The present invention relates to a method for tempering glass panels, said method comprising the steps of
- performing a chilling operation by blasting to the glass surface jets of a tempering gas, which are produced partially by a compressor pressure through pipe nozzles and partially by a fan through orifices present in a nozzle box cover; and
- performing an after-cooling operation in the same chilling station as the above-mentioned chilling operation by means of cooling air jets, which are produced exclusively by the fan through the orifices present in the nozzle box cover.

The invention relates also to an apparatus for tempering glass panels, said apparatus comprising:
- a heating furnace for glass panels;
- a chilling station provided with rolls for carrying the glass panels;
- upper nozzle boxes whose cover is provided with fan air orifices for blasting downward air jets to the top surface of a glass panel;
- lower nozzle boxes whose cover is provided with fan air orifices for blasting upward air jets to the bottom surface of a glass panel;
- a fan in connection with the nozzle boxes for blasting fan air jets through said fan air orifices;
- compressed-air boxes within said upper and lower nozzle boxes;
- pipe nozzles in connection with the compressed-air boxes; and
- a compressed-air source, equipped with a compressor and connected with said compressed-air boxes for blasting jets of compressed air through the pipe nozzles.

The Applicant's patent application EP-A-558912 discloses a nozzle assembly, which enables a concurrent use of compressor-produced jets of compressed air and fan-produced jets of fan air However, the relative disposition of compressed-air jets and fan air jets is not implemented in an optimal fashion in terms of making a common cooling station, along with its nozzles, suitable for both power tempering and after-cooling. In this context, the term power tempering refers to such a chilling power which has a coefficient of heat transfer of at least 600 W/m²K. The power tempering like this is required e.g. when tempering (without metal wires) is used for producing glass panels included in the fireproof category E30 or E60. The higher the stress achieved by tempering, the longer the glass is capable of withstanding the heat-induced annealing.

The power tempering is also needed in the following cases. Glasses with a low coefficient of heat expansion, such as borosilicate glasses and also thin, less than 3 mm thick glasses require effective chilling in order to create thermal stresses needed in tempering (compression stress in the surface and tensile stress in the middle). On the other hand, the effective chilling requires a high coefficient of heat transfer. The tempering of borosilicate glasses and e.g. 2,5 mm thick glasses requires a coefficient of heat transfer of more than 1000 W/m²K. Prior to the present invention, the only way to reach such a high coefficient of heat transfer has been oil hardening.

Patent publication US-A-4,913,720 discloses an apparatus, which comprises a separate chilling zone connected with compressed air upheld by means of a compressor, and an after-cooling zone provided with fan-produced jets of cooling air. The highest coefficient of heat transfer used in tests conducted according to the cited publication has been about 560 W/m²K, which is not sufficient for the purposes of the present invention.

Patent publication GB-A-2,232,978 also discloses a two-phase cooling, wherein a compressor pressure is initially used for a higher coefficient of heat transfer. Even though the publication mentions that the coefficient of heat transfer is within the ranges of 300-1000 Kcal/m² x h x °C (equivalent to about 350-1160 W/m²K), said publication discloses no solution for achieving such a high coefficient of heat transfer. The highest coefficient of heat transfer used in the tabulated examples is 600 Kcal/m² x h x °C (equivalent to about 700 W/m²K), which has obviously been the highest coefficient of heat transfer reached by the test apparatus.

An object of the invention is to provide a method and an apparatus of the above-mentioned type, capable of achieving a chilling process more effective than earlier in the same chilling station and by the same nozzle means which can be used for performing an after-cooling process which is lower in terms of its coefficient of heat transfer but massive in terms of its air volume and a relatively lengthy process.

This object is achieved by means of a method set forth in the annexed claim 1 and an apparatus set forth in claim 3. Preferred embodiments of the invention are set forth in the dependent claims.

The invention will now be described in more detail by way of an exemplary embodiment with reference made to the accompanying drawings, in which
- fig. 1: shows in a lateral view an essential section for an apparatus used for implementing the method, with one nozzle box shown in cross-section; and
- fig. 2: shows schematically in a side view a tempering apparatus, which is provided with a chilling station 16 of the invention.

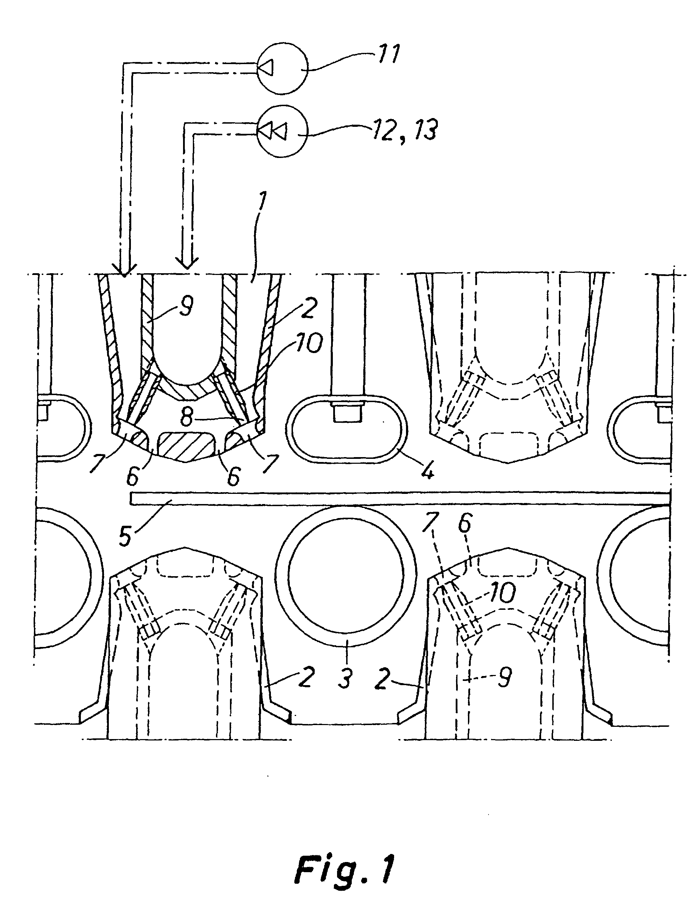

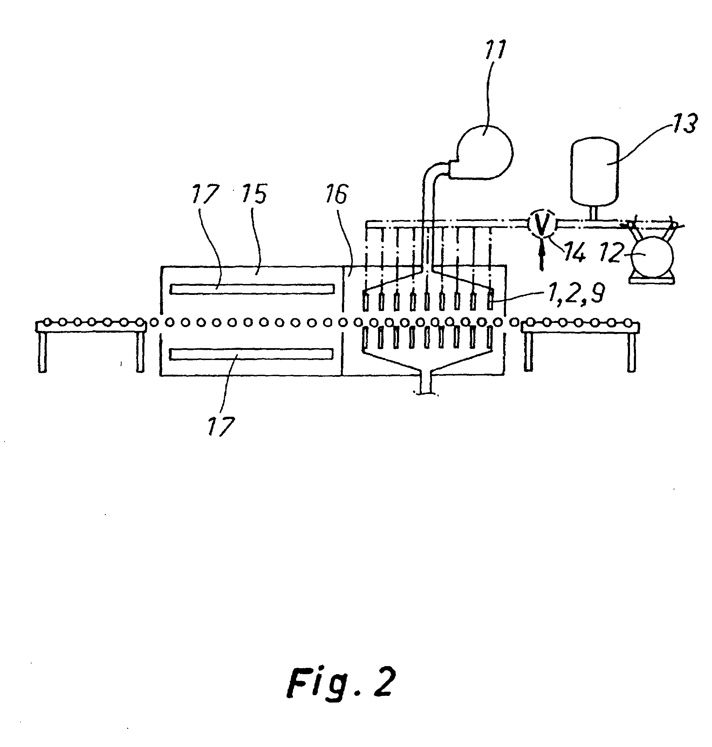

The apparatus shown in fig. 2 comprises a furnace 15, provided with heating elements 17 above and below a roll conveyor for heating a glass panel to a tempering temperature. The heated glass panel is carried by the roll conveyor into a cooling station 16, which functions both as a chilling station and as an after-cooling station. Above and below a conveyor plane constituted by the roll conveyor the station 16 is provided with cooling air boxes 1, 2, 9, which are connected on the one hand to a fan 11 and on the other hand to a compressed-air source 13 for a compressor 12 by way of a valve 14. The cooling air boxes and nozzle assemblies therefor are depicted in more detail in fig. 1.

In fig. 1, nozzle boxes 1 above a glass panel 5 supported by rolls 3 are structurally and in terms of nozzle systems thereof substantially identical to nozzle boxes 1 set below the glass panel 5. Therefore, the upper and lower nozzle boxes and the components thereof are indicated by the same reference numerals. The nozzle boxes 1 have covers 2 which are provided with fan air orificies 6 and 7, through which the air produced by a fan 11 discharges as air jets towards the surface of the glass panel 5. The nozzle orifices 7 have a diameter in the range of 5-7 mm, preferably about 6 mm. The orifices 6 have a diameter in the range of 3-5 mm, preferably about 4 mm. The cover thickness at the orifices 7 is e.g. 6 mm and at the orifices 6 it is 8-9 mm, whereby the orifices 6, 7 will have a sufficient axial length for a nozzle effect, in order to produce directional jets. The orifices 7 along the edges of the cover 2 are directed obliquely away from each other in the flowing direction of the jets. The orifices 6 extend in a substantially orthgonal direction to the glass. The rows constituted by orifices 6 are located between the rows constituted by orifices 7. The number of orifices 6 can be substantially equal to that of orifices 7.

Within the nozzle boxes 1, 2 are compressed-air boxes 9, which are connected to a compressed-air source 13 for a compressor 12. The compressed-air boxes 9 are provided with screwed-on pipe nozzles 10, which extend towards the orifices 7. The pipe nozzles 10 have orifices 8 with a diameter within the range of 2,5-3,6 mm and, depending on the magnitude of applied overpressure, the air flow rate discharging through a given nozzle 10 is 3-6 I/s. The number of pipe nozzles is typically within the range of 400-500 pcs/m². Thus, the air flow rate discharging through the pipe nozzles is typically within the range of 1,2-3 m³/m²/s. The overpressure required for this in the pressure chamber 9 is typically within the range of 1-2,5 bar.

The pipe nozzles 10 have their orifices 8 opening in line with the enlarged bases of the fan air orifices 7. The outer sides of the nozzles 10 taper conically towards the nozzle tip. The tip of a given nozzle 10 is almost level with the inner surface of the cover 2 and may extend inside the orifice 7 or remain slightly outside the same. What is essential is that the tip of a given nozzle 10 does not restrict at least substantially the flow area of a respective compressed-air orifice 7, the orifices 7 being able to deliver fan air at a maximum rate while the compressed-air jets discharging from the orifices 8 intensify the flow of fan air through an ejector effect. Regarding the cooperation between the orifices 7 and 8, it has been found beneficial that the orifice 7 be given a diameter whose ratio to the diameter of the orifice 8 is within the range of 1,5-2,4, preferably within the range of 1,7-1,9.

The chilling operation intensified with a method of the invention is carried out by blasting to the glass surface chilling air jets, which are partially produced by means of a compressor pressure through the pipe nozzles 10 and partially by means of the fan 11 through the orifices 6 and 7 present in the cover 2. The air flow rate to be blasted just through the pipe nozzles 10 is more than 1 m³/m²/s, typically within the range of 1,3-1,7 m³/m²/s. Thus, this volume of air is blasted from the orifices 8 through the fan air orifices 7 while blasting through all fan air orifices 6 and 7 quite a large volume of air produced by the fan 11.

After the surfaces of a glass panel have cooled down sufficiently for tempering, the after-cooling operation will be performed in the same cooling station 16 with cooling air jets discharged through the orifices 6 and 7 solely by means of the fan 11. The coefficient of heat transfer remains considerably lower as no compressor air is used. The reason for this is that the flow rates in the immediate vicinity of the glass surface are substantially reduced. However, the volume of air will be sufficient for a required after-cooling effect and such a volume of air can be produced advantageously and for a sufficiently long period by means of the fan 11.

The above-described method and apparatus offer a solution, whereby the power tempering and final cooling can be carried out in one and the same station. Prior to the present invention, this has required two separate stations with different nozzle systems.

## Claims

1. A method for tempering glass panels, said method comprising the steps of
- performing a chilling operation by blasting to the glass surface jets of a tempering gas, which are produced partially by a compressor pressure through pipe nozzles (10) and partially by a fan (11) through orifices (6, 7) present in a nozzle box cover (2); and
- performing an after-cooling operation in the same chilling station (16) as the above-mentioned chilling operation by means of cooling air jets, which are produced exclusively by the fan (11) through the orifices (6, 7) present in the nozzle box cover (2),
**characterized in that**, during the chilling operation, blasting is effected by the pipe nozzles (10) only through some (7) of the fan air orifices (6, 7) present in the nozzle box cover in such a way that the ejector effect of pipe nozzle jets intensifies the flow of fan air through the relevant fan air orifices (7), and that, in addition to this, the others (6) of the fan air orifices (6, 7) are used to blast exclusively fan air concurrently with said combined blasting of fan and compressor air.

2. A method as set forth in claim 1, **characterized in that** the air flow rate to be blasted through the pipe nozzles (10) in the chilling operation is more than 1 m³/m²/s, preferably about 1,3-1,7 m³/m²/s.

3. An apparatus for tempering glass panels, said apparatus comprising:
- a heating furnace (15) for glass panels;
- a chilling station (16) provided with rolls (3) for carrying the glass panels;
- upper nozzle boxes (1) whose cover (2) is provided with fan air orifices (6, 7) for blasting downward air jets to the top surface of a glass panel (5);
- lower nozzle boxes (1) whose cover (2) is provided with fan air orifices (6, 7) for blasting upward air jets to the bottom surface of a glass panel;
- a fan (11) in connection with the nozzle boxes (1) for blasting fan air jets through said fan air orifices (6, 7).
- compressed-air boxes (9) within said upper and lower nozzle boxes (1);
- pipe nozzles (10) in connection with the compressed-air boxes (9); and
- a compressed-air source (13), equipped with a compressor (12) and connected with said compressed-air boxes (9) for blasting jets of compressed air through the pipe nozzles (10),
**characterized in that** the pipe nozzles (10) open into some (7) of the fan air orifices (6, 7) and leave the others (6) of the fan air orifices (6, 7) unoccupied and **in that** the nozzle pipe orifices, having an orifice diameter of 2,5-3,6 mm, open in line with the enlarged bases of the fan air orifices with a diameter of 5-7 mm in such a way that the pipe nozzles (10) do not substantially restrict the cross-sectional area of the relevant fan air orifices (7) but provide the same with an ejector effect intensifying the flow of fan air.

4. An apparatus as set forth in claim 3, **characterized in that** the fan air orifice (7) has a diameter whose ratio to the diameter of an orifice (8) of the pipe nozzle (10) opening therein is 1,5-2,4.

5. An apparatus as set forth in claim 3 or 4, **characterized in that** the fan air orifices (6) unoccupied by the pipe nozzles (10) are smaller in terms of their diameter than the fan air orifices (7) in communication with the pipe nozzles (10).

6. An apparatus as set forth in any of claims 3-5, **characterized in that** the pipe nozzles (10) and the fan air orifices (7) in communication therewith are located adjacent to the outer edges of the nozzle box cover (2) and extend obliquely away from each other in the flowing direction of the jets, and that the fan air orifices (6) unoccupied by the pipe nozzles (10) extend essentially orthogonally to the glass and are located between rows of the fan air orifices (7) in communication with the pipe nozzles (10).

7. An apparatus as set forth in any of claims 3-6, **characterized in that** the outer sides of the pipe nozzles (10) taper conically towards the nozzle tip, which is almost level with the inner surface of the cover (2) at the enlarged inlet of the fan air orifice (7).

## Patentansprüche

1. Verfahren zum Härten von Glasscheiben, wobei das Verfahren die folgenden Schritte umfasst:
Ausführen eines Abschreckvorgangs durch Blasen von Strahlen eines Härtgases auf die Glasoberfläche, die teilweise durch einen Kompressordruck über Rohrdüsen (10) und teilweise durch ein Gebläse (11) über Öffnungen (6, 7) erzeugt werden, die in einer Düsenkastenabdeckung (2) vorhanden sind, und
Ausführen eines Nach-Kühlvorgangs in der gleichen Abschreckstation (16) wie für den oben erwähnten Abschreckvorgang mittels kühlender Luftstrahlen, die ausschließlich durch das Gebläse (11) über die Öffnungen (6, 7) erzeugt werden, die in der Düsenkastenabdeckung (2) vorhanden sind,
**dadurch gekennzeichnet, dass** während des Abschreckvorgangs das Blasen durch die Rohrdüsen (10) lediglich über einige (7) der Gebläseluftöffnungen (6, 7), die in der Düsenkastenabdeckung vorhanden sind, so ausgeführt wird, dass die Ausstoßwirkung von Rohrdüsenstrahlen den Strom von Gebläseluft über die entsprechenden Gebläseluftöffnungen (7) verstärkt, und dass zusätzlich dazu die anderen (6) der Gebläseluftöffnungen (6, 7) genutzt werden, um ausschließlich Gebläseluft gleichzeitig zu dem kombinierten Blasen von Gebläse- und Kompressorluft zu blasen.

2. Verfahren nach Anspruch 1, **dadurch gekennzeichnet, dass** die Luft-Strömungsmenge, die bei dem Abschreckvorgang über die Rohrdüsen (10) zu blasen ist, mehr als 1 m³/m²/s, vorzugsweise ungefähr 1,3-1,7 m³/m²/s, beträgt.

3. Vorrichtung zum Härten von Glasscheiben, wobei die Vorrichtung umfasst:
einen Erwärmungsofen (15) für Glasscheiben;
eine Abschreckstation (16), die mit Walzen (3) zum Transportieren der Glasscheiben versehen ist;
obere Düsenkästen (1), deren Abdeckung (2) mit Gebläseluftöffnungen (6, 7) zum Blasen von Luftstrahlen nach unten auf die Oberseite einer Glasscheibe (5) versehen ist;
untere Düsenkästen (1), deren Abdeckung (2) mit Gebläseluftöffnungen (6, 7) zum Blasen von Luftstrahlen nach oben auf die Unterseite einer Glasscheibe versehen ist;
ein Gebläse (11) in Verbindung mit den Düsenkästen (1) zum Blasen von Gebläseluftstrahlen über die Gebläseluftöffnungen (6,7);
Druckluftkästen (9) in den oberen und den unteren Düsenkästen (1);
Rohrdüsen (10) in Verbindung mit den Druckluftkästen (9); und
eine mit einem Kompressor (12) ausgestattete und mit den Druckluftkästen (9) verbundene Druckluftquelle (13) zum Blasen von Druckluftstrahlen über die Rohrdüsen (10),
**dadurch gekennzeichnet, dass** die Rohrdüsen (10) sich in einige (7) der Gebläseluftöffnungen (6, 7) öffnen und die anderen der Gebläseluftöffnungen (6, 7) nicht einnehmen und dadurch, dass die Düsenrohröffnungen, die einen Öffnungsdurchmesser von 2,5-3,6 mm haben, sich fluchtend mit den vergrößerten Basen der Gebläseluftöffnungen mit einem Durchmesser von 5-7 mm so öffnen, dass die Rohrdüsen (10) die Querschnittsfläche der betreffenden Gebläseluftöffnungen (7) nicht wesentlich einschränken, sondern diesen eine Ausstoßwirkung verleihen, die den Strom von Gebläseluft verstärkt.

4. Vorrichtung nach Anspruch 3, **dadurch gekennzeichnet, dass** die Gebläseluftöffnung (7) einen Durchmesser hat, dessen Verhältnis zum Durchmesser einer Öffnung (8) der Rohrdüse (7), die sich darin öffnet, 1,5 - 2,4 beträgt.

5. Vorrichtung nach Anspruch 3 oder 4, **dadurch gekennzeichnet, dass** die Gebläseluftöffnungen (6), die von den Rohrdüsen (10) nicht eingenommen werden, hinsichtlich ihres Durchmessers kleiner sind als die Gebläseluftöffnungen (7), die mit den Rohrdüsen (10) in Verbindung stehen.

6. Vorrichtung nach einem der Ansprüche 3-5, **dadurch gekennzeichnet, dass** die Rohrdüsen (10) und die Gebläseluftöffnungen (7), die damit in Verbindung stehen, an die äußeren Ränder der Düsenkastenabdeckung (2) angrenzend angeordnet sind und sich in der Strömungsrichtung der Strahlen schräg voneinander weg erstrecken, und dass die Gebläseluftöffnungen (6), die von den Rohrdüsen (10) nicht eingenommen werden, sich im Wesentlichen rechtwinklig zu dem Glas erstrecken und zwischen Reihen der Gebläseluftöffnungen (7) angeordnet sind, die mit den Rohrdüsen (10) in Verbindung stehen.

7. Vorrichtung nach einem der Ansprüche 3-6, **dadurch gekennzeichnet, dass** die Außenseiten der Rohrdüsen (10) sich konisch auf die Düsenspitze zu verjüngen, die nahezu auf einer Höhe mit der Innenfläche der Abdeckung (2) am vergrößerten Einlass der Gebläseluftöffnung (7) ist.

## Revendications

1. Procédé de trempe de panneaux de verre, ledit procédé comprenant les étapes qui consistent à :
- effectuer une opération de refroidissement rapide par projection sur la surface du verre de jets d'un gaz de trempe, qui sont produits partiellement par une pression fournie par un compresseur à travers des gicleurs (10) et partiellement par une soufflante (11) à travers des orifices (6, 7) présents dans un couvercle de diffuseur (2) ; et
- effectuer une opération de refroidissement complémentaire, au même poste de refroidissement rapide (16) que l'opération de refroidissement rapide mentionnée ci-dessus, au moyen de jets d'air de refroidissement, qui sont produits exclusivement par la soufflante (11) à travers les orifices (6, 7) présents dans le couvercle de diffuseur (2),
**caractérisé en ce que**, pendant l'opération de refroidissement rapide, la projection par les gicleurs (10) est effectuée uniquement à travers les orifices (7) des orifices d'air de soufflante (6, 7) présents dans le couvercle de diffuseur, de telle sorte que l'effet d'éjection produit par les jets sortant des gicleurs intensifie l'écoulement de l'air de soufflante à travers les orifices d'air de soufflante concernés (7), et **en ce que**, en plus de ceci, les autres orifices (6) des orifices d'air de soufflante (6, 7) sont utilisés pour projeter exclusivement l'air de soufflante simultanément à ladite projection combinée d'air de soufflante et d'air de compresseur.

2. Procédé selon la revendication 1, **caractérisé en ce que** le débit d'air à projeter à travers les gicleurs (10) dans l'opération de refroidissement rapide est supérieur à 1 m³/m²/s, de préférence d'environ 1,3 - 1,7 m³/m²/s.

3. Appareil pour tremper des panneaux de verre, ledit appareil comprenant :
- un four de chauffage (15) pour les panneaux de verre ;
- un poste de refroidissement rapide (16) pourvu de rouleaux (3) pour le transport des panneaux de verre ;
- des diffuseurs supérieurs (1) dont le couvercle (2) est pourvu d'orifices d'air de soufflante (6, 7) pour la projection de jets d'air vers le bas sur la surface supérieure d'un panneau de verre (5) ;
- des diffuseurs inférieurs (1) dont le couvercle (2) est pourvu d'orifices d'air de soufflante (6, 7) pour la projection de jets d'air vers le haut sur la surface inférieure d'un panneau de verre ;
- une soufflante (11) raccordée aux diffuseurs (1) pour la projection de jets d'air à travers lesdits orifices d'air de soufflante (6, 7) ;
- des chambres à air comprimé (9) à l'intérieur desdits diffuseurs supérieurs et inférieurs (1) ;
- des gicleurs (10) raccordés aux chambres à air comprimé (9) ; et
- une source d'air comprimé (13), constituée d'un compresseur (12), et raccordée auxdites chambres à air comprimé (9) pour la projection de jets d'air comprimé à travers les gicleurs (10),
**caractérisé en ce que** les gicleurs (10) s'ouvrent dans certains (les orifices 7) des orifices d'air de soufflante (6, 7) et laissent les autres (les orifices 6) inoccupés, et **en ce que** les orifices des gicleurs, ayant un diamètre d'orifice de 2,5 - 3,6 mm, s'ouvrent en alignement avec les bases élargies des orifices d'air de soufflante, ayant un diamètre de 5 - 7 mm, de telle sorte que les gicleurs (10) ne bloquent pas considérablement l'aire en section transversale des orifices d'air de soufflante concernés (7), mais leur appliquent un effet d'éjection intensifiant l'écoulement de l'air de soufflante.

4. Appareil selon la revendication 3, **caractérisé en ce que** l'orifice d'air de soufflante (7) a un diamètre dont le rapport au diamètre d'ouverture d'un orifice (8) du gicleur (10) est de 1,5 - 2,4.

5. Appareil selon la revendication 3 ou 4, **caractérisé en ce que** les orifices d'air de soufflante (6) non occupés par les gicleurs (10) ont un diamètre inférieur à celui des orifices d'air de soufflante (7) en communication avec les gicleurs (10).

6. Appareil selon l'une quelconque des revendications 3 à 5, **caractérisé en ce que** les gicleurs (10) et les orifices d'air de soufflante (7) en communication avec eux sont situés en contiguïté des bords extérieurs du couvercle de diffuseur (2) et s'étendent de manière oblique en s'éloignant les uns des autres, dans la direction d'écoulement des jets, et **en ce que** les orifices d'air de soufflante (6) non occupés par les gicleurs (10) s'étendent d'une manière essentiellement orthogonale au verre et sont situés entre des rangées d'orifices d'air de soufflante (7) en communication avec les gicleurs (10).

7. Appareil selon l'une quelconque des revendications 3 à 6, **caractérisé en ce que** les côtés extérieurs des gicleurs (10) s'effilent d'une manière conique en direction de leur pointe, qui se trouve à peu près au même niveau que la surface intérieure du couvercle (2), au niveau de l'entrée élargie de l'orifice d'air de soufflante (7).
